# EUROPEAN PATENT APPLICATION

(11) **EP 1 174 802 A2**
(43) Date of publication of application: **23.01.2002**
(21) Application number: 01101069.1
(22) Date of filing: 09.03.2001
(51) Int. Cl.: G06F 17/30

(54) **Method for global data and information transmission from directories and a language-image-synthesis processor for same**

(30) Priority: 23.06.2000 DE 10030770
(71) Applicant: net-linx AG, 01309 Dresden (DE)
(72) Inventor: Bader, Rami, Edmonton, Alberta (CA); Borynec, Jim, Sherwood Park, Alberta (CA); Czlonka, John, Edmonton, Alberta (CA); Goebel, Randy, Edmonton, Alberta (CA); Kirchner, Lutz, 01099 Dresden (DE); Krause, Falk, 01099 Dresden (DE); Langhorn, Ken, St. Albert, Alberta (CA)
(74) Representative: Popp, Eugen, Dr.

(57) **Abstract**

A method for global data and information transmission from directories that are accessible online is provided, in particular for databases classified according to type of business or industry that can be accessed by way of local portals. The method comprises the erection of at least one central or several internally connected network communicators, on which access and translation programs are installed in order to translate incoming inquiries into a common language intrinsic to the system. Thereafter a system-integrated coordination of inquiries and data contents by access to the directories accessible online is carried out by means of the translation programs. Data and items of information are structured and/or translated according to requirements and to the language of the inquiring user or network participant. The data and items of information are then transmitted to the inquiring user or network participant.

## Description

### Field of the Invention

The present invention relates to a method for global data and information transmission from directories that are accessible online, in particular databases classified according to type of business or industry and accessed through local portals, and to a language-image-synthesis processor, in particular for implementing the said method.

### Description of the Prior Art

As use of the World Wide Web has become increasingly common, in recent years a great variety of user groups have gained access to almost unimaginable quantities of data, across national and continental boundaries. The problem with this growing amount of information lies in rapidly and precisely finding what is needed - that is, in optimizing the number of hits while simultaneously shortening the time required for the search operation. Furthermore, problems are encountered when databases are to be made available to various sectors of the economy and to users speaking different languages, which makes direct access practically impossible. Therefore substantial sets of data that need to be disclosed and utilized remain unknown unless the particular database operator installs individual tags or key words in one or more foreign languages, by means of which the content of the database can be revealed, even though very imprecisely.

For a long time it has been customary to present goods or services by way of radio or TV programs. Special programs or parts of programs are dedicated to describing the product, after which customers are given the opportunity to place an order by telephone or in writing. A disadvantage here is, first, that the customer must make a note of the information required for ordering the goods, while on the other hand no direct contact is made with a potential customer group, or such contact occurs only after the customer has decided to take action. Furthermore, experience has shown that when such presentations or sales promotions solicit responses by telephone, as a rule the lines become overloaded immediately after the program or even during transmission, so that the potential customer is deterred from trying again to obtain information or place an order.

The opportunity for online shopping over the Internet makes it possible, when suitable software is used, to examine the stock catalogs of mail-order companies or other purveyors of goods. Here, again, the customer must move through a mass of material, sometimes arranged so that it is not easily surveyed, and then expend considerable effort to fill his or her personal shopping basket and complete the order. So far, a customer working in the Internet can in some cases incur appreciable costs, associated on one hand with acquiring the suitable technology and on the other hand with the fees charged by fixed network telecommunication operators. In addition, the Internet user encounters language barriers that constitute a further obstacle to acceptance.

German patent DE 196 47 341 discloses a method and an apparatus for the projection and reception of visual and audio-visual messages and their analysis to determines radius of action and customer behaviour.

According to the teaching there, it is proposed to provide at least one projection area with an input and an output sensor controlling projection via architecturally and ergonomically arranged displays and determining the radius of action. A supplementary consumption area is provided with an electronic cash register recording customer behavior; these two areas can coincide. The data provided from both areas are correlated by means of a computer, and from the result a particular customer behavior is derived, with statistical evaluation where appropriate. Hence by means of the method disclosed there, customer behavior is formulated for the vendor of the product, so that new marketing possibilities can be discovered.

The object of the present invention to provide a further-developed method for global data and information transmission from directories accessible online, which owing to improved functionality is more rapidly capable of ensuring optimal access to sources that are otherwise not linguistically accessible without further assistance, so as to open up new marketing opportunities in so-called e-commerce.

A further object of the invention comprises the disclosure of new possibilities for promoting sales and marketing with the method provided allowing bi-directional information about offered goods or services to be requested in a simple manner, or an order to be initiated directly with no need for the customer to be encumbered by the informing or ordering process due to a requirement for extensive data input or subsequent contacts. It is likewise a matter of bringing to light a buyer's interest in an especially effective and rapid way, so as to obtain new insights for market or product research.

### Summary of the Invention

According to a first aspect of the present invention there is provided a method for the transmission of global data and information from directories that are accessible online, comprising the steps of:
- providing access and translation programs
- erecting at least one network communicator on which the access and translation programs are installed;
- translating incoming inquiries into a common language intrinsic to the system using the access and translation programs;
- activating a system-integrated coordination of inquiries and data contents by access to the directories accessible online, by means of the translation programs;
- structuring data and items of information according to the requirements and to the language of the inquiring user or network participant; and
- transmitting the data and the items to the inquiring user or network participant.

One of the first, minimal steps in the method in accordance with the invention for global data and information transmission from directories that are accessible online, in particular databases classified according to type of business or industry, such as the so-called Yellow Pages, and accessed by way of local portals, is to set up a network communicator on which access and translation programs are centrally installed. These programs translate incoming inquiries into a common language specially designed for the system. The next step is an allocation of inquiries to data content, by a process integral to the system with which the directories available online are examined; that is, the external data are accessed by utilizing the translation programs. The subsequent relaying of the data or information occurs after structuring as well as translation into the language of the receiver, according to the requirements of the network participant in each case.

The invention can also be embodied by installing, instead of a single network communicator, several such servers that are internally connected, in order to handle greater quantities of data.

With a view to improving the success of sales and marketing by electronic media, including the Internet, it is proposed in accordance with the invention that along with the transmission an identification code is sent out, which is associated with the goods and/or services being presented in each case and which can also contain information about the transmitting agency itself, such as the location of the branch of the firm that is closest to the receiver. The identification code accompanying the transmission is selected by a receiver already available to the customer or provided for the purpose, and retained in temporary storage. This receiver can be a personal computer, a laptop or similar electronic apparatus.

In addition, a customer-specific code that at least contains details that identify the customer can be transmitted or input to the receiver and stored, so that the customer is authorized to be a participant in the system.

When interest is expressed in the goods and/or services being offered, e.g. as a result of hearing a radio program, watching a TV program or visiting a website, the customer can directly or indirectly trigger a switching signal that then, under processor control, initiates storage of the identification code together with the customer-specific code. Subsequently the stored code packet is transmitted or transferred to the vendor, or to a central service unit commissioned by the vendor, which then undertakes to make contact with the customer and/or to deliver the ordered goods or services to the customer.

The code packet can be transmitted by way of an existing telecommunication network, so that new possibilities for acquisitions are opened up for the operators of such networks as well.

The customer-specific code is preferably stored on a medium, in particular a chip card, that can be read by the receiver by way of an input terminal. This terminal can be a component of a laptop or PDA.

For the sake of security and to avoid erroneous orders, a confirmation signal or the input of an enabling signal on the part of the customer is required before the code packet is forwarded.

Once a successful further transmission of the code packet can be confirmed by the vendor or the central service unit, an acknowledgment signal is sent so that the customer receives the desired feedback. This feedback can take the form of a return message sent to the customer's own home page or e-mail address.

In a further embodiment the opportunity is provided to initiate new transmission operations under processor control, until the transmitted transaction has been successfully acknowledged.

A method of this kind would then offer the possibility of direct acquisition of an audience rating or allow monitoring of the number of hits, with the aim of optimizing the effectiveness of market research. Furthermore, information about traffic, touring, railway and/or flight schedules can be called up in a targeted manner, while access to a central or local video database or the like can also be configured.

The kernel of the invention thus comprises enabling network communication between quite different users and quite different databases in a simple manner, by way of a central so-called format translator, such that the databases can be set up on the basis of regions, or of vendors, and so on. Another important point is that there is a dictionary, so to speak, of the different formats in which the databases are stored or described, which cooperates with the format translator. The mutual compatibility thus achieved for entirely different databases, which can then be utilized and operated by the user through accessing the format translator, frees up the customary browsers or search engines, although of course it is also possible, in addition, to make use of the format translator externally to present an additional program module that is compatible with the format with which the user is working, or that is required by the hardware available to the user.

The central network communicator or communicators containing central access and translation programs employ a special global language, in particular XML.

This global language is preferably a text-based metalabeling language, which enables data or documents to be described and structured in such a way that they can be exchanged among a plurality of applications and processed further, in particular by way of the Internet.

The language used is extensible, because here, in contrast to HTML, it is a matter not of a rigid format in the sense of a particular labeling language but rather of a metalanguage, which makes available prescriptions and rules with which to specify an arbitrarily large number of concrete labeling languages for a great variety of documents.

With the global language, the structure and content of documents can be described so precisely that it is fundamentally no longer necessary to integrate into the applications, as a fixed component thereof, the information necessary to understand data and manipulate it further (i.e., the standard). Instead, when data are to be exchanged, they are accompanied, so to speak, by the information necessary to utilize these data. Ultimately an advantage of the global language resides in the fact that along with support of document exchange in general, it enables the flexible re-use of data; that is, a basis for a utilization of metadata is created, which results in an increased interoperability of different applications and great opportunities for retrieval. In the basic idea of the global language, it is designed for a separation of content, structure and layout.

Global-language documents contain tags, to serve as labels, and items of content between the tags. However, whereas the number and the names of the tags are predetermined for HTML, for global-language documents an arbitrary number of freely, semantically named tags can be used. In this way the labels can contain information about the content, and the nesting of the tags one within another can represent the structure of the data.

The meaning of the content of the tags is derived from the semantic labeling, while the nesting reflects the structure of the data. Whereas known HTML documents primarily describe how the content of the tags should be-represented, a global-language document can contain information about the meaning of the content.

Accordingly, the logical structure is determined by the arrangement of the tags in the document. The tags used in a global-language document are, so to speak, used as named brackets, to subdivide the content of the elements. A global-language document can be broken down into an arbitrarily large number of physical units, regardless of its logical structure. However, all tags opened in a given physical unit must also be closed again in that unit. In this way the possibility exists to assemble in one global-language document various global-language data that are distributed in the network, which represents an essential idea in the conversion of the teaching in accordance with the invention with a view towards the central network communicators with central access and translation programs.

The representation of a global-language document is achieved with the aid of a format specification, a so-called style sheet. In this style sheet the layout of the document is specified. By means of the style sheets both the authors and the users of web documents can influence their presentation, without having to relinquish the ability to do further processing by device- or application-independent means. Thus the use of different style sheets can enable a document to be adapted for different purposes, for example printing out and display on a monitor screen.

Furthermore, the global-language makes available rules with which to define particular labeling languages. Here there are fundamentally two ways in which to specify these rules, i.e. the grammar of the specific labeling language. Global-language documents can comprise a definition of the necessary or possible tags and their structure, by means of which a labeling language is defined. For this purpose the global language, like XML, can employ a formal grammar, the so-called document type definition (DTD). This grammar contains the required and permitted tags and their nesting.

In order to determine the function of the tags in the individual documents, attributes can be defined optionally, necessarily or fixedly. A document to which a DTD has been assigned is termed valid if none of the rules defined in the DTD is infringed within the document.

By means of the DTD it becomes possible to write programs to check a global-language document for structural defects or to create a new case of this document type. In the case of an exemplary DTD with semantic labeling, this can comprise an order form with customer, name, forename and e-mail as well as an order list containing at least one item, which in turn is composed of an identifying name, an article number and a number denoting quantity. The elements concerned can contain plain text. An example of such a DTD is the valid order form. Obviously, additional fields can be added to the DTD at any time. A DTD proves to be advantageous when several differently configured documents of the same basic type are to be stored. Then the DTD serves as a general pattern, which can contain the details regarding which of the elements must be used in a given document and which can appear as often as desired, i.e. not at all, once or multiply.

A global-language document is thus a text file which in addition to the content, i.e. the pure data, also contains its structure or general metadata that can be transferred to various applications.

By means of a document object model (DOM) a platform- and language-independent interface can be constructed that permits programs or script languages to access dynamically the content, the structure and the layout of a global-language document and to alter it. The relevant document can then be further processed and the results of this processing can be embedded again in the current page or adapted to the user's requirements.

For example, the content of a global-language file can be represented as a tree structure. The tree model would then be the basis for the transfer and adaptation to various applications. By means of a so-called parser, the tags can be separated from the information contained, so that ultimately a hierarchy diagram is derived from the nesting of the tags. Thus the items of information can be made available for further machine-processing in the sense of the invention.

That is, here all tags and their contents, together with their mutual relations, are defined as objects and represented in an object hierarchy that can be accessed. The objects associated with a document are accessible, for example, with Java, JavaScript or ActiveX. One possible application of the DOM would be an automatic production of an index.

Another substantial advantage of the global language is the improved support of the further transmission of information, i.e. so-called linking. Thus in addition to the creation of unidirectional links, this language also makes it possible to provide multidirectional links that direct the user to several resources simultaneously, as well as bi-directional links, which refer to one another in both directions.

Within the central network communicators, then, a standardized data-exchange format is used. The global language constitutes an efficient basis for the operation of network communicators, for instance when a web client, or an application based thereon, desires loss-free processing of data between various systems with differing data formats that can be standardized according to interest-group-specific criteria.

As an ancillary benefit, the load on processor and network is distributed from server to client. Because it is possible to encode all the data that belong to a document into the global language, all the information necessary for processing of the document can be transmitted and can be implemented appropriately by the client.

Similarly, a variable representation of information becomes possible. Global-language data can be viewed in various ways, depending on the intended application. For example, only those parts of a particular set of software documentation can be displayed that are of interest for the current operating system.

On the basis of the system created here, comprising network communicator and global language, intelligent software agents can understand the meaning of appropriately encoded information. For instance, an improved indexing of web pages or products or services is made possible, so that the well-known problem of mis-hits owing to homonyms and synonyms in search engines can be solved.

By means of the method presented here, a new network service can be set up for the provision of information, which allows users worldwide to make inquiries of online lists by way of local access stations or portals.

One of the possible applications thus enabled is the online publishing of so-called Yellow Pages, i.e. classified directories of firms. Another type of application is for so-called online newspapers and media publishers with particular requirements regarding efficient search engines for databases. Still other potential applications can be found in the area of extensive invoice administration systems, and in the management of process control.

According to a second aspect of the present invention there is provided a language-image-synthesis processor for carrying out the method according to the first aspect of the invention, the processor being assigned to at least one central server and comprising a unit for the identification of languages and a compatibility component for determining whether and to what extent original and target languages are consistent, such that in case of any inconsistency a central language conversion into the target language can be carried out permitting graphical, alphanumeric representation of the converted result on a conventional display means.

The language-image-synthesis processor may be either integrated into one or more central servers or is associated therewith.

This synthesis processor makes possible a dynamic conversion between the recipient of the inquiry and a source, such that the characters in which a language is written are converted into suitable representations in other linguistic contexts. In this sense, therefore, a shift of the language decoding and the display from customer to server is brought about by means of a centrally and globally accessible conversion or translation function of written characters.

The advantage of the central processor resides further in the fact that language processing can be carried out on any device that permits graphic display, with no need for additional language software to be installed in such a local device.

As has been explained, the processor receives an inquiry that identifies both the original and the target language. In case the sets of characters used by the two languages are not compatible, the processor converts the target text data into a graphic to be displayed at the originating device, which enables the desired universal language display on any external local device.

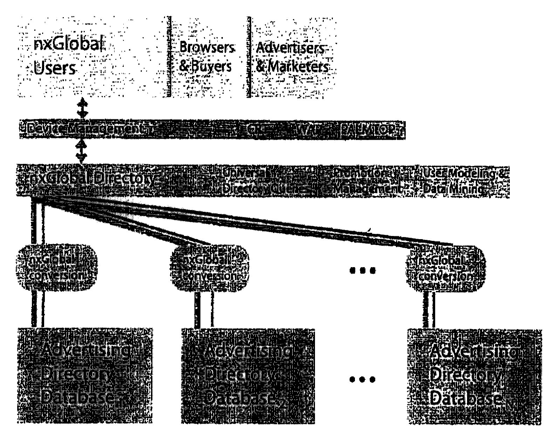

An example of the present invention will now be described by way of example with reference to the accompanying drawing.

### Brief Description of the Drawing

The single figure of the drawing comprises a block diagram representing the function and the construction of the network communication system, employing performance levels built up by a global language and here termed nxGlobal Directory/Conversion.

### Description of the Preferred Embodiments

First, an example of the application of the global language-image-synthesis processor will be presented.

An English-speaking person in New York accesses a global directory system to obtain information from an online directory in China.

The Chinese system sends this information back to the global system in the form of Chinese logographs. Here the language-image-synthesis processor detects that the inquiry came from an English-based browser, and converts the Chinese characters into a corresponding graphic. When the conversion is completed, the global directory system transmits the graphic representation of the index back to the inquirer or user in New York, so that it can be displayed at the inquirer's device in such a way that the inquirer can understand it, with no loss of data.

For such a system, or for the method presented here for global data and information transmission, a universal directory-inquiry language can find employment. This directory-inquiry language is distinguished by a simple structure and permits universal access to quantities of data in directory databases that bear no resemblance at all to one another.

The basic idea in this special language lies in making available a uniform interrogation syntax that does not require all the target directory databases to be translated into a uniform format. A processor functioning with this language thus permits simple, language-like interrogation to be undertaken with dissimilar remote data stores, in order to extract directory information from any online directory system. That is, by means of the directory-inquiry language it becomes possible to create a virtual global directory database with no need to take elaborate measures for depositing all the remote data in a central memory and combining them there.

A further aspect of the preferred directory-inquiry language to be used is that this language is optimized with respect to the directory data and their use. Implementation of the language presented here within the global search system or the system for data and information transmission enables integration of a particular online directory at the relevant point in time with no need for access to the data of the publisher. When the data format used in the individual sites changes, only simple modifications of the inquiry-language parameters are required in order to ensure appropriate, correct results of the interrogation.

For example, the following instances of using the system can be taken as a point of departure.

An Australian publisher of online directories would like to join a global directory-search system. Here the special directory-inquiry language is used in order to find out how the Australian data are defined and how they should be interrogated, which enables rapid construction within the global system that is to be created.

In another example, the market saturation of fast-food restaurants in Los Angeles in comparison to Paris is to be monitored. Because the inquiry language knows the data formats of both local directory systems and is capable of putting together the corresponding relevant relationships, a market-saturation report of this kind can rapidly be produced.

In yet another example a publisher on the market in Hong Kong wants to find out how many of his local users request hotel information from New York. By means of the directory-inquiry language the protocols related to use of the global system can be interrogated in order to select these particular data.

In the same sense, the method presented here can be used for global distribution, e.g. for publicity and advertising purposes. It is also possible to employ the special inquiry language to identify a remote target group for the advertisement, so that in a next step specific advertising content can be sent to this identified set of potential customers. Thus the possibility exists for the advertiser to identify appropriate target markets by means of demographic parameters and thereby provide content suitable for this customer group.

The advertiser is guaranteed access to a reliable central website where a target group can be selected on the basis of geography, demography or another relevant market category. The user is given the opportunity to compile an advertisement designed for this target group or to download it from the system and specify at which time or how often the information should be changed. There also exists the possibility, known *per se*, of initiating online payment transactions for services rendered, and this possibility can integrated into the system.

Thus the system can likewise be used for the distribution of coupons, wherein a coupon can be sent to an advertisement portal of an arbitrary directory, where it is retrieved and can be definitively activated. The advertiser can thereby be given the opportunity to distribute sales coupons among the target customer group by means of a simple online interface.

For example, the manufacturer can create a special sales-price coupon with which he offers a discount, and which is adapted to the local language, culture, currency, taxes and other requirements. The coupons can then be activated in various online directories of the main metropolises, e.g. in Argentina, Chile, Mexico and so on.

The image processor can furthermore be a component of a graphical user interface to the data received from the global distribution and interrogation of the network.

In this case the system is used to create a graphical representation of geographic market information online, wherein the data themselves derive from the commercial data generated by the global directory service. For this purpose the flow of global search inquiries, which is provided by the global service, is used to create a special statistical database. An analysis of this database then gives concrete insight, for the particular case, into the search behavior, local interests, geographic volume and other relevant market characteristics. In addition it is possible to derive from the search behavior a prediction of how the market will behave in the future.

For example, suppose that a worldwide distributor of classical music CDs wants to be informed rapidly about differences in regional preferences so as to plan future investments accordingly.

By selecting inquiries for particular artists/composers and associating these with the interest groups in the corresponding countries or regions of origin, a visual picture can be obtained of the sales potential to be expected in each region. The picture so obtained, or the converted graphic, as well as the underlying statistics then serve, as it were, as a direction pointer for distribution management and can be employed for future market planning.

A further exemplary embodiment is based on the possibility of selecting and reliably storing concrete, i.e. specific, content directories. Here the end user is given the ability at any time to access a central file deposited specifically for that user on the server, and to add directories to, or remove them from, this central file as desired. In principle the relevant directory can be accessible online from every kind of device; that is, a laptop, a PDA or a device with WAP interface can be used.

In the same way, every end user can download the relevant file, modified for or verified by that user, on any device with local storage capacity. The format conversion and the file-size management are carried out centrally, so that the requirements for the user are minimized in terms of both hardware and software.

This is illustrated by the following exemplary application.
A businessman plans to travel to Australia, New Zealand and the Philippines. He uses the system proposed here and first searches for restaurants and taxi companies in Melbourne. He chooses some of them and enters them into his personal file. Then he finds that there is a fitness studio near his hotel and also enters this into the file. He repeats this procedure for his planned sojourns in New Zealand and the Philippines. Then he calls up the file once again in order to seek out some directories for theaters in Melbourne, which in turn he enters into his special file. Subsequently the data are stored. On the day before his trip he downloads the stored information onto his PDA. When he leaves Australia he deletes the Australian directory but keeps the one for New Zealand. As soon as he has returned to the home office, he deletes all the data and updates the associated network file by means of a simple synchronization step.

The marketing functionality of the system can be improved by a site-based, wireless information transmission. In this way target markets worldwide can be identified and such information can be combined with site information.

To convert this exemplary embodiment in the sense of a target-promotion system, a software processor based on a single server is provided, which dynamically manages a database for active promotion that can be transmitted to the target user on the basis of wireless transmission of the device location. Furthermore, the system can coordinate database information with cellular device locations, in order to send target information or the above-mentioned coupons to individual, specific addressees or persons.

By means of the opportunity thus provided, information contents of advertisements can be made available interactively in a considerably more concrete form, as well as staggered in time, such that special promotions can be sent to individual customers according to inquiry and location.

The following examples are conceivable here. Targeted promotion projects could contain special coupons, offers to customers or time-limited discounts, about which a receiver learns upon inquiring and which he then without delay can use to purchase goods or services. Thus a user interested, for example, in restaurants could inquire about currently applicable special offers or discounts on meals, and would receive data only for those restaurants that are in that user's vicinity.

Hence, the global system for data and information transmission can also be used to convert company names or the addresses of the advertising customers and their identifying labels from one language into another. In this regard it is an inherent property of the system to have a central data source for names registered in a variety of languages. Individual persons or users thus have access to special sites in which preferred directory names can be stored in various languages. These directories are part of the index and are available to other end users or inquirers for searching the database.

Accordingly, individual persons can search for special directories in their mother tongue or in another language of their choice.

It is thus possible, for instance, for an English-speaking user to use the system to find names of restaurants in Moscow, because these names are presented in English or Cyrillic characters.

The system presented here therefore makes available a tool for carrying out market researches with worldwide access to content-directory databases. Users can use the individual databases to assemble all the data that are available for a particular area of interest. The search results can then be collated and displayed in a specified format, to facilitate access and interrogation.

Accordingly, employment of the method presented here enables extensive and intensive market expansion, such that those offering information are brought together with their customers in online transactions in an optimal matter, in which time, location, culture, language, personal interests and inclinations, and the nature of the interactive devices, i.e. the hardware, no longer play any fundamental role.

Another example of employment of the method in accordance with the invention consists in the computer-assisted management of information and presentation of information and data as required to carry out highly specific projects. An opportunity is provided for targeted searches for information or computer-assisted execution of commercial processes or research and development projects (i.e., learning tasks) in the context applicable to each case, by those who have no knowledge of programming. An overall system needed for the solution to the problem can easily be configured to suit the specific applications with respect to the available resources. In the system of network communicators, previously configured connections and knowledge applications can be freely combined with new ones, and an automated event- or process-controlled exchange of knowledge building blocks becomes possible by means of which the user's work with the computer is supported and optimized. At any time resource or user profiles can be produced that contain the knowledge required to increase the value of a project that is being created. Here "knowledge" should be understood as a structured totality of items of information comprising in particular data stocks, documents, preconfigured working models and connectivity rules for these. With conversion of the invention various resource or user profiles are stored, which are in an unambiguous relationship to specific project types. When someone is working with a project, then, according to the type of project a previously stored resource profile is activated and the knowledge it contains is made available to the worker on the computer. In this connection there is simultaneously transmitted to the user the resource connectivity useful for working with his project.

The above-mentioned resource profiles comprise, on one hand, object data - in particular master data, address data and document data - and on the other hand process data, which include in particular system-controlling, system-linking, menu-management, task-assembly and function-library data. Resource links are defined in particular as instances of access to programs or program components intrinsic and/or external to the system and/or access to documents or databases intrinsic or external to the system and/or connections to internal and/or external communication addresses. With the activation of a resource profile, on one hand a usefully structured collection of data and documents is made available to the operator, while on the other hand the user is given access to the required tools in the form of programs or program components suitable for his -project, and finally he is automatically incorporated into a predetermined communication network by way of which the items of information additionally needed can be acquired or particular processing steps can be developed. By means of the language-image-synthesis processor a menu management with graphical user surface can be implemented, which in dialog mode enables selection of the project type and, where necessary, the input of additional characteristics. The adaptation thus achieved, to reception and operation events understood by a large number of users distributed worldwide, makes it considerably easier for these users to become accustomed to and make use of systems previously foreign to them. With the graphically supported project access that is preferably provided, project structures and system relationships can advantageously be visualized and associative possibilities can be set out for the user in advance.

## Claims

1. A method for the transmission of global data and information from directories that are accessible online, comprising the steps of:
- providing access and translation programs
- erecting at least one network communicator on which the access and translation programs are installed;
- translating incoming inquiries into a common language intrinsic to the system using the access and translation programs;
- activating a system-integrated coordination of inquiries and data contents by access to the directories accessible online, by means of the translation programs;
- structuring data and items of information according to the requirements and to the language of the inquiring user or network participant; and
- transmitting the data and the items to the inquiring user or network participant.

2. A method as claimed in Claim 1, wherein a plurality of internally connected network communicators are provided.

3. A method as claimed in Claim 1, wherein the common language intrinsic to the system is a text-based metalabeling language, which permits the description, exchange, representation and manipulation of structured data.

4. A method as claimed in Claim 1, wherein the structure and the content of database documents are described by means of the common language intrinsic to the system in such a way that no integration step is required for the understanding and further processing of data.

5. A method as claimed in Claim 1, wherein the common language intrinsic to the system comprises a style sheet that determines the layout of the document of interest, the language including a definition of necessary and possible tags and their structure to define a labeling language.

6. A method as claimed in Claim 5, wherein a formal grammar is provided for the definition of the labeling language, the grammar comprising the tags and their nesting.

7. A method as claimed in Claim 1, wherein a platform- and language-independent interface is provided allowing programs and script languages to access dynamically the content, the structure and the layout of a document to be transmitted and to alter these documents in order that they can be processed and the results of processing can be inserted into a current page.

8. A method as claimed in Claim 1, wherein multidirectional links are provided that direct the user to several resources simultaneously, and the common language intrinsic to the system supports bi-directional links, which make reference in both directions in order that it becomes possible to refer simultaneously to several other documents and files, such that the referenced documents can be opened in at least one browser window, as desired.

9. A method as claimed in Claim 1, wherein a distribution of processor and network load from server to user occurs inasmuch as all the data that belong to a document are encoded into the common language intrinsic to the system, so that all the information necessary for processing the document is transmitted therewith and can be executed in the appropriate manner by the user.

10. A method as claimed in Claim 1, wherein the data translated into the common language intrinsic to the system can be viewed in different ways dependent on the momentary application, such that in the case of program modules only the items of information of interest for the particular operating system are selected and transmitted.

11. A language-image-synthesis processor for carrying out a method as claimed in Claim 1, the processor being assigned to at least one central server and comprising a unit for the identification of languages and a compatibility component for determining whether and to what extent original and target languages are consistent, such that in case of any inconsistency a central language conversion into the target language can be carried out permitting graphical, alphanumeric representation of the converted result on a conventional display means.

12. A processor as claimed in Claim 11, wherein the processor is integrated into at least one central server.
